(19) Europäisches Patentamt
European Patent Office
Office européen des brevets

(11) **EP 1 156 681 A2**

(12) **EUROPÄISCHE PATENTANMELDUNG**

(43) Veröffentlichungstag:
**21.11.2001 Patentblatt 2001/47**

(51) Int Cl.⁷: **H04N 17/00**

(21) Anmeldenummer: **01111491.5**

(22) Anmeldetag: **11.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.05.2000 DE 10024374**

(71) Anmelder: **Micronas Munich GmbH**
**81541 München (DE)**

(72) Erfinder:
• **Hahn, Marko**
**15370 Petershagen (DE)**
• **Wendel, Dirk**
**82008 Unterhaching (DE)**
• **Niedermeier, Ulrich**
**80796 München (DE)**

(74) Vertreter: **Patentanwälte**
**Westphal, Mussgnug & Partner**
**Mozartstrasse 8**
**80336 München (DE)**

(54) **Verfahren und Vorrichtung zum Messen des in einem Bild enthaltenen Rauschens**

(57) Zur Ermittlung des in einem Bild enthaltenen Rauschens wird vorgeschlagen, zunächst homogene Bildbereiche des Bildes zu ermitteln (100-102) und anschließend in diesen homogenen Bildbereichen (BR) den hochfrequenten Signalanteil zu messen. Die Messung des hochfrequenten Signalanteils wird dabei über viele Messpunkte, d.h. über viele homogene Bildbereiche (BR) gemittelt und zu einer Rauschzahl (NOISE_SUM) verarbeitet (103-104). Auf diese Weise kann die Qualität des Bildes direkt im Bildinhalt gemessen werden.

## FIG 1

Anzahl Meßpunkte < Parameter

Berechne Tiefpasskoeffizienten LP — 100

$MAX(LP) - MIN(LP) = DIFF$ — 101

— 102

DIFF < GAP?

homogen          inhomogen

103 —
$$NOISE\_SUM = NOISE\_SUM + \sum_{i=0}^{i<5} |HP(i)|$$

Bereich verwerfen

Messung anzeigen — 104

EP 1 156 681 A2

**Beschreibung**

Verfahren und Vorrichtung zum Messen des in einem Bild enthaltenen Rauschens

Die vorliegende Erfindung betrifft ein Verfahren bzw. eine Vorrichtung zum Messen des in einem Bild, insbesondere einem TV-Bild, enthaltenen Rauschens.

Um die Qualität von verrauschten Bildern zu verbessern, können Rauschreduktionsalgorithmen angewendet werden. Derartige Algorithmen würden jedoch die Bildqualität herabsetzen, wenn nur wenig Rauschen vorhanden und der visuelle Eindruck des jeweiligen Bildes ohnehin gut ist. Daher ist es wünschenswert, die Rauschreduktionsalgorithmen adaptiv an den Grad des in dem jeweiligen Bild enthaltenen Rauschens anzupassen, d.h. in wenig verrauschten Bildern sollen lediglich geringe Korrekturen vorgenommen werden, während in Bildern mit schlechter Qualität stärkere Korrekturen vorgenommen werden. Hierzu muss das in dem Bild enthaltene Rauschen quantitativ bestimmt werden.

Das Standardmaß für die Bestimmung der Bildqualität ist der sogenannte PSNR-Wert ("Peak Signal to Noise Ratio"). Dieses Maß erfordert jedoch ein unverrauschtes Referenzbild, so dass es in Fällen, bei denen ein solches nicht zur Verfügung steht, nicht anwendbar ist.

Des weiteren wurde das Rauschen bisher bei bekannten Verfahren, die beispielsweise zur Rauschreduktion im TV-Bereich verwendet werden, in der Austauschlücke des jeweiligen TV-Signals gemessen, d.h. in denjenigen Zeitintervallen, in denen kein aktiver Bildinhalt übertragen wird. Da die Austauschlücke des TV-Signals zunehmend durch digitale Dienste, z.B. für die Übertragung von Videotextinformationen, belegt wird, ist dieses bisher durchgeführte Verfahren nur noch schlecht anwendbar. Dieses Problem wird dadurch verschärft, dass die digitalen Dienste, mit denen die Austauschlücke des TV-Signals belegt wird, zudem von Land zu Land verschieden sind.

Der vorliegenden Erfindung liegt daher die Aufgabe zugrunde, ein Verfahren sowie eine entsprechende Vorrichtung zum Messen des in einem Bild enthaltenen Rauschens vorzuschlagen, wobei die zuvor beschriebenen Probleme beseitigt sind und insbesondere die Bildqualität direkt im Bildinhalt gemessen werden kann.

Diese Aufgabe wird erfindungsgemäß durch ein Verfahren mit den Merkmalen des Anspruches 1 bzw. eine Vorrichtung mit den Merkmalen des Anspruches 14 gelöst. Die Unteransprüche definieren jeweils bevorzugte vorteilhafte Ausführungsformen der vorliegenden Erfindung.

Um die Bildqualität direkt im Bildinhalt messen zu können, muss das Rauschen vom Bildinhalt getrennt werden, damit die jeweils beispielsweise in Form einer Rauschzahl getroffene Aussage über das in dem Bild enthaltene Rauschen nicht durch die im Bild enthaltenen Strukturen verfälscht wird.

Dies wird erfindungsgemäß dadurch erreicht, dass zunächst homogene Bereiche des Bildes ermittelt werden, die wenig Strukturen aufweisen. Bei diesen homogenen Bereichen kann es sich beispielsweise um einen nahezu einfarbigen Bildhintergrund (z.B. einen blauen Himmel) handeln. In diesen homogenen Bildbereichen wird anschließend der hochfrequente Signalanteil gemessen. Die Messungen werden vorzugsweise über mehrere Messpunkte oder auch über mehrere aufeinanderfolgende Bilder (beispielsweise im TV-Bereich) gemittelt, um schließlich eine quantitative Aussage über das Rauschen zu erhalten.

Da die vorliegende Erfindung insbesondere für einen Einsatz im TV-Bereich geeignet sein soll, werden die Operationen zur Bestimmung der homogenen Bildbereiche sowie zum Messen des hochfrequenten Signalanteils insbesondere zeilenorientiert durchgeführt, d.h. die hierzu erforderlichen Zugriffe auf die Messdaten können Zeile für Zeile erfolgeln, wie es dem abgetasteten und digitalisierten TV-Signal entspricht. Die Schritte zur Ermittlung der homogenen Bildbereiche sowie zum Messen des hochfrequenten Signalanteils sind dabei aufeinander abgestimmt, so dass sich der erfindungsgemäß vorgeschlagene Algorithmus sehr effektiv in Hardware implementieren läßt.

Die Ermittlung der homogenen Bildbereiche erfolgt vorzugsweise durch Auswertung der Luminanzwerte der einzelnen Bildpunkte des jeweils betrachteten Bildes. Hierzu kann das Bild in mehrere nebeneinanderliegende Blöcke aufgeteilt werden, welche wiederum mehrere horizontal nebeneinanderliegende Bildpunkte (Pixel) aufweisen. Als besonders vorteilhaft hat es sich erwiesen, wenn jeweils Bildbereiche ausgewertet werden, die fünf Blöcke zu jeweils fünf horizontal nebeneinanderliegenden Pixeln aufweisen.

Für jeden Block kann dann mit einem (1,1,1,1,1)-Filter der Gleichanteil ermittelt werden. Liegt die Differenz zwischen dem maximalen Gleichanteilwert und dem minimalen Gleichanteilwert der fünf horizontal nebeneinanderliegenden Bildblöcke innerhalb einer vorgegebenen Toleranzgrenze, kann dieser Bildbereich mit insgesamt 25 Bildpunkten als homogen angesehen werden.

Wurde auf diese Weise ein Bildbereich als homogen erkannt, kann für jeden Block dieses Bildbereiches der hochfrequente Signalanteil beispielsweise durch Verwendung eines (1,-2,2,-2,1)-Filters berechnet werden. Die hochfrequenten Signalanteile der einzelnen Blöcke des homogenen Bildbereichs werden aufaddiert, so dass schließlich die Summe dieser hochfrequenten Signalanteile in Form einer Rauschzahl als quantitative Aussage über das in dem jeweils betrachteten Bild enthaltene Rauschen ausgegeben wird.

Da sowohl die Berechnung der Gleichanteile als auch der hochfrequenten Signalanteile bei dem zuvor beschriebenen Ausführungsbeispiels jeweils fünf Taktzyklen erfordert, kann der Datenfluss ohne Wartezyklen gestaltet werden. Selbstverständlich ist die vorliegende Erfindung nicht darauf beschränkt, dass jeweils Bildbereiche mit fünf Blöcken zu jeweils fünf horizontal nebeneinanderliegenden Bildpunkten betrachtet werden. Die Breite der Blöcke, d. h. die Anzahl der in jedem Block enthaltenen Bildpunkte, sollte jedoch nicht zu klein sein, um eine vernünftige Aussage über den jeweils vorhandenen Gleichanteil bzw. hochfrequenten Signalanteil zu ermöglichen. Andererseits sollten die Blöcke nicht zu groß gewählt werden, da ansonsten nur sehr große homogene Bildbereiche in dem jeweiligen Bild für die Messung des Rauschens genutzt werden können. Die Unterteilung des Bildes in Blöcke zu jeweils fünf horizontal nebeneinanderliegenden Bildpunkten hat sich insofern als vorteilhaft herausgestellt, als dass sich in diesem Fall zur Bestimmung der hochfrequenten Signalanteile ein einfach (nur mit Bit-Verschiebeoperationen) zu implementierendes Hochpassfilter entwerfen lässt, welches gute Eigenschaften im Frequenzgang aufweist.

Alternativ zu den reinen Luminanzwerten der einzelnen Bildpunkte können als Eingangsdaten für den erfindungsgemäßen Algorithmus auch die Differenzwerte der Luminanzwerte zweier aufeinanderfolgender Bildzeilen verwendet werden. Der Vorteil dieses Verfahrens ist, dass dadurch der Bildinhalt unterdrückt wird, da durch die Differenzwertbildung vertikale Strukturen herausfallen oder herausgefiltert werden und nicht die Rauschzahl beeinflussen können. Zudem können bei Anwendung dieses Verfahrens mehr homogene Bildbereiche gefunden werden, wodurch die Zuverlässigkeit der getroffenen Aussage über das in dem Bild enthaltene Rauschen erhöht wird, da über eine größere Zahl von Messwerten gemittelt werden kann.

Die vorliegende Erfindung liefert im Prinzip als Ausgangsgröße nur eine einzige Zahl, die das (über einen einstellbaren Bereich gemittelte) Rauschen darstellt. Zusätzlich werden jedoch auch Informationen über die Lage der in dem Bild enthaltenen homogenen Bildbereiche zur Verfügung gestellt, die vorteilhafterweise für die anschließende Rauschreduktion verwendet werden können, da das Rauschen in nicht-homogenen Bildbereichen mit intensiver Struktur ohnehin besser verdeckt ist und eine Rauschreduktion an diesen Stellen zu einer Verflachung des Bildinhaltes führen würde.

Die vorliegende Erfindung wird nachfolgend anhand eines bevorzugten Ausführungsbeispiels unter Bezugnahme auf die beigefügte Zeichnung näher erläutert.

Figur 1 zeigt ein Ablaufdiagramm eines Verfahrens zum Messen des in einem Bild enthaltenen Rauschens gemäß einem bevorzugten Ausführungsbeispiel der vorliegenden Erfindung,

Figur 2 zeigt eine Darstellung zur Verdeutlichung des in Figur 1 dargestellten Verfahrens, und

Figur 3 zeigt eine mögliche schaltungstechnische Realisierung des anhand Figur 1 und Figur 2 beschriebenen Verfahrens.

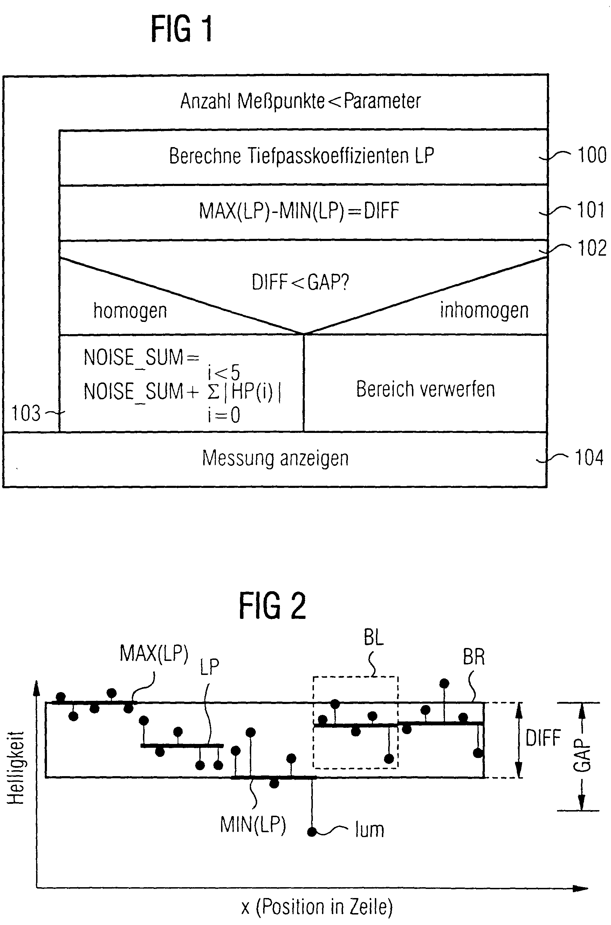

In Figur 1 ist der prinzipielle Ablauf eines erfindungsgemäßen Verfahrens zum Messen des in einem Bild enthaltenen Rauschens in Form eines Ablaufdiagramms dargestellt.

Wie in Figur 1 gezeigt ist, umfasst das Verfahren eine Schrittsequenz 100-104, die vorzugsweise mehrmals nacheinander durchlaufen wird, bis eine durch einen entsprechenden Parameter definierte Anzahl an Messpunkten verarbeitet worden ist. Die Schritte 100-102 dienen zur Ermittlung homogener Bildbereiche, wobei insbesondere die jedem einzelnen Bildpunkt zugewiesenen Luminanzwerte des Bildes blockweise ausgewertet werden, wobei vorzugsweise jeweils fünf nebeneinanderliegende Bildblöcke zu jeweils fünf Bildpunkten betrachtet werden. Die Verarbeitung der Bilddaten erfolgt dabei jeweils zeilenweise. Für jeden Block wird mit Hilfe eines geeigneten Filters der Gleichanteil, d.h. ein entsprechender Tiefpasskoeffizient LP, ermittelt. Anschließend wird in einem Schritt 101 die Differenz DIFF zwischen dem maximalen Gleichanteilwert und dem minimalen Gleichanteilwert der in dem jeweils betrachteten Bildbereich enthaltenen Blöcke ermittelt. In einem Schritt 102 wird untersucht, ob die somit ermittelte Differenz DIFF innerhalb einer vorgegebenen und vorzugsweise einstellbaren Toleranzgrenze GAP liegt. Ist dies nicht der Fall, wird der Bildbereich als inhomogen betrachtet und für die Berechnung der Rauschzahl verworfen. Ist hingegen der berechnete Differenzwert DIFF kleiner als der vorgegebene Toleranzgrenzwert GAP, wird der betrachtete Bildbereich als homogen angesehen.

Für diesen homogenen Bildbereich wird in einem Schritt 103 der hochfrequente Signalanteil in dem entsprechenden Bildsignal berechnet. Zu diesem Zweck wird mit Hilfe eines geeigneten Filters für jeden Block des betrachteten Bildbereichs ein Hochpasskoeffizient HP berechnet und die einzelnen Hochpasskoeffizienten aufaddiert. Die daraus resultierende Summe NOISE_SUM wird in einem Schritt 104 als Rauschzahl angezeigt und liefert eine quantitative Aussage über das in dem jeweils betrachteten Bild enthaltene Rauschen. Anschließend kann das zuvor beschriebene Verfahren für den nächsten homogenen Bildbereich desselben Bildes oder für ein darauffolgendes Bild wiederholt werden, bis eine gewünschte Anzahl an Messpunkten erreicht worden ist.

Das zuvor beschriebene Verfahren soll nachfolgend näher unter Bezugnahme auf Figur 2 erläutert werden, wobei die nachfolgend beschriebene Realisierung besonders vorteilhaft für eine Implementierung des Verfahrens in Hardware ist, da der schaltungstechnische Aufwand gering ist und keine Wartezyklen im Datenfluss auftreten.

In Figur 2 sind mehrere horizontal nebeneinanderliegende Bildpunkte (Pixel) mit dem jedem Bildpunkt zugewiesenen Helligkeits- oder Luminanzwert lum aufgetragen. Die Verarbeitung der Bilddaten erfolgt, wie bereits zuvor erwähnt worden ist, zeilenweise, d.h. die in Figur 2 gezeigten Bildpunkte befinden sich in ein und derselben Bildzeile des jeweils betrachteten Bildes.

Das Bild wird in mehrere Blöcke BL unterteilt, wobei jeder Block BL eine bestimmte Anzahl von horizontal nebeneinanderliegenden Bildpunkten aufweist. Bei dem in Figur 2 gezeigten Beispiel umfasst jeder Block BL fünf Bildpunkte. Für jeden dieser Blöcke wird mit einem (1,1,1,1,1)-Filter der Gleichanteil oder Mittelwert der Luminanzwerte der darin enthaltenen Bildpunkte berechnet. D.h. für jeden Block BL wird ein Tiefpasskoeffizient LP gemäß folgender Beziehung berechnet:

$$(1) \quad LP(x',y) = \sum_{i=0}^{4} \; lum(i+5x',y)$$

Dabei bezeichnet LP(x',y) den Tiefpasskoeffizienten des Blocks mit den Blockkoordinaten (x',y), während lum(x,y) den Luminanzwert des Bildpunkts mit den Pixelkoordinaten (x,y) bezeichnet. Der Block mit den Blockkoordinanten (0,y) umfasst die Bildpunkte mit den Pixelkoordinaten (0,y), (1,y), (2,y), (3,y) und (4,y). Der Block mit den Blockkoordinaten (1,y) umfasst entsprechend die Bildpunkte mit den Pixelkoordinaten (5,y), (6,y), (7,y), (8,y) und (9,y), etc.

Durch Auswertung der auf diese Weise berechneten Tiefpasskoeffizienten werden nunmehr homogene Bildbereiche erfasst. Dabei werden jeweils Bildbereiche BR untersucht, die fünf nebeneinanderliegende Bildblöcke BL umfassen (vergleiche Figur 2), so dass jeweils fünf aufeinanderfolgende Tiefpasskoeffizienten LP ausgewertet werden.

In dem jeweils betrachteten Bildbereich BR wird der maximale Tiefpasskoeffizient MAX(LP), d.h. der maximale Gleichanteil der in diesem Bildbereich BR enthaltenen Blöcke BL, und der minimale Tiefpasskoeffizient MIN(LP), d.h. der minimale Gleichanteil der in dem betrachteten Bildbereich BR enthaltenen Bildblöcke BL, ermittelt und die Differenz DIFF = MAX(LP) - MIN(LP) berechnet. Ist der auf diese Weise berechnete Differenzwert DIFF kleiner als ein vorgegebener Toleranzgrenzwert GAP, so gilt dieser aus 25 Bildpunkten bestehende Bildbereich BR als homogen und wird für die nachfolgend näher beschriebene Messung des hochfrequenten Signalanteils verwendet.

Der Toleranzgrenzwert GAP ist vorteilhafterweise einstellbar. Ein strenger, d.h. kleinerer, Toleranzgrenzwert macht die Messung zuverlässiger, bewirkt jedoch andererseits, dass weniger homogene Bildbereiche gefunden werden, über die gemittelt werden kann. Des weiteren macht ein kleinerer Toleranzgrenzwert die Anzeige des Messergebnisses bei einem vorgegebenen Umfang von Messpunkten langsamer.

Wurde auf diese Weise ein Bildbereich BR als homogen erkannt, wird für diesen Bildbereich der darin enthaltene hochfrequente Signalanteil des entsprechenden Bildsignals berechnet. Zu diesem Zweck wird für jeden Block BL des homogenen Bildbereichs BR der hochfrequente Signalanteil mit einem (1,-2,2,2,1)-Filter in Form eines entsprechenden Hochpasskoeffizienten HP wie folgt berechnet:

$$HP(x',y) = lum(5x',y) - 2lum(1+5x',y) + 2lum(2+5x',y) - 2lum(3+5x',y) + lum(4+5x',y) \qquad (2)$$

Dabei bezeichnet HP(x',y) den hochfrequenten Signalanteil bzw. Hochpasskoeffizienten des Blocks BL mit den Blockkoordinaten (x',y), während lum(x,y) den Luminanzwert des Bildpunkts mit den Pixelkoordinaten (x,y) bezeichnet (vergleiche die obige Beschreibung zur Berechnung von LP(x',y)). Die für die einzelnen Blöcke BL auf diese Weise berechneten Hochpasskoeffizienten HP werden zu der in Figur 1 gezeigten Rauschzahl NOISE_SUM aufaddiert.

Da sowohl die Berechnung der Tiefpasskoeffizienten LP und die Ermittlung des Homogenitätskriteriums als auch die Berechnung der Hochpasskoeffizienten HP fünf Taktzyklen erfordert, kann der Datenfluss ohne Wartezyklen gestaltet werden. Die Breite der Blöcke BL muss nicht unbedingt fünf Bildpunkte umfassen. Die Breite sollte jedoch nicht zu klein gewählt werden, um eine vernünftige Aussage über den Gleichanteil bzw. den hochfrequenten Signalanteil zu ermöglichen. Andererseits sollte die Breite der Blöcke nicht zu groß gewählt werden, da ansonsten nur sehr große homogene Bildbereiche im Bild für die Messung des Rauschens genutzt werden können. Werden Blöcke zu jeweils fünf horizontal nebeneinanderliegenden Bildpunkten verwendet, kann das zur Berechnung des hochfrequenten Signalanteils benötigte Hochpassfilter einfach durch Bit-Verschiebeopera-tionen realisiert werden, wobei dieses Hochpassfilter zudem gute Eigenschaften im Frequenzgang aufweist.

Bei dem zuvor beschriebenen Ausführungsbeispiel wurde davon ausgegangen, dass jeweils Bildbereiche BR untersucht werden, die fünf Blöcke BL mit jeweils fünf horizontal nebeneinanderliegenden Bildpunkten umfassen. Es sind jedoch auch homogene Bildbereiche mit mehr als 25 Bildpunkten möglich. Erfüllt beispielsweise der Block mit den Blockkoordinaten (x'+5,y) das Homogenitätskriterium mit den vorhergehenden vier Blöcken, so wird auch dieser Block vorteilhafterweise ausgewertet, so dass sich ein homogener Bildbereich mit mehr als 25 Bildpunkten ergibt.

Bei der Beschreibung des obigen Ausführungsbeispiels wurde davon ausgegangen, dass die Berechnung der Tiefpasskoeffizienten LP und die Berechnung der Hochpasskoeffizienten HP jeweils durch Auswertung der den einzelnen Bildpunkten zugeordneten Luminanzwerten erfolgt. Alternativ zu den reinen Luminanzwerten können als Eingangsdaten für das erfindungsgemäße Verfahren auch die Differenzwerte der Luminanzwerte zweier aufeinanderfolgender Bildzeilen verwendet werden. Der Vorteil dieser Vorgehensweise ist, dass der Bildinhalt durch das Herausfiltern vertikaler Strukturen infolge der Differenzwertbildung unterdrückt wird. Des weiteren können bei dieser Vorgehensweise mehr homogene Bildbereiche gefunden werden, so dass über eine größere Zahl von Messwerten gemittelt werden kann.

In der Regel wird auch bei unverrauschten Bildern die Summe der Hochpasskoeffizienten nicht exakt den Wert null ergeben. Es ist daher sinnvoll, vor Durchführung des erfindungsgemäßen Verfahrens diesen Nullpunktfehler, d.h. die Abweichung von dem Summenwert null bei einem unverrauschten Bild, zu ermitteln, so dass dieser Nullpunktfehler bei Messungen von verrauschten Bildern anschließend mit Hilfe eines entsprechenden Offsetwerts kompensiert werden kann.

Bei dem zuvor beschriebenen Verfahren kann vorteilhafterweise eingestellt werden, nach wievielen untersuchten Bildbereichen die Messung, d.h. die Rauschzahl NOISE_SUM, angezeigt werden soll. Eine schnelle Anzeige führt dazu, dass Bilder, deren Struktur die Messung verfälschen, stärker durchschlagen können. Ebenso kann mit Hilfe eines weiteren Parameters die Empfindlichkeit der Messung insofern eingestellt werden, als dass durch entsprechende Wahl dieses Parameters vorgegeben werden kann, bei welcher Rauschintensität ein Vollausschlag angezeigt werden soll. Des weiteren kann durch Einstellung eines entsprechenden Parameters der Abhängigkeit zwischen der Zahl der jeweiligen gefundenen Messpunkte und der Größe des Toleranzbereiches entgegengewirkt werden. Werden pro Bild lediglich wenige Messpunkte, d.h. eine geringe Anzahl von homogenen Bildbereichen, ermittelt, kann der Toleranzgrenzwert GAP um einen bestimmten Wert erhöht werden, um auch Bildbereiche für die Ermittlung des hochfrequenten Signalanteils zuzulassen, die mit dem ursprünglichen Toleranzgrenzwert GAP als nicht-homogen erkannt worden sind. Dabei kann die Veränderung des Toleranzgrenzwerts GAP auch mehrstufig durchgeführt werden, wobei der Wert, um den der Toleranzgrenzwert GAP verändert wird, abhängig von der jeweils ermittelten Anzahl an homogenen Bildbereichen eingestellt wird.

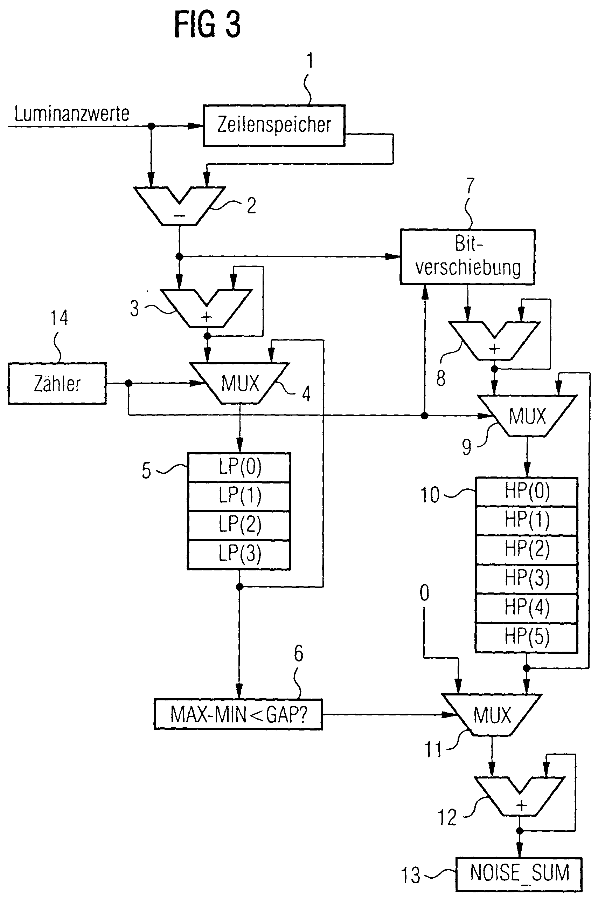

In Figur 3 ist eine mögliche schaltungstechnische Realisierung des zuvor beschriebenen erfindungsgemäßen Verfahrens dargestellt, wobei insbesondere eine Schaltung für das mit Zeilendifferenzwerten arbeitende Ausführungsbeispiel dargestellt ist. Die Luminanzwerte der einzelnen Bildpunkte werden einem Zeilenspeicher 1 zugeführt und dort gespeichert. Des weiteren werden die Luminanzwerte jeweils einem Subtrahierer 2 zugeführt, der aus dem Zeilenspeicher 1 den Luminanzwert des entsprechenden Bildpunkts der unmittelbar benachbarten Bildzeile empfängt und daraus den Differenzluminanzwert berechnet. Die Ausgangswerte des Subtrahierers 2 dienen als Eingangswerte für die Schaltungsteile 3-6, die zur Berechnung der Gleichanteile bzw. der Tiefpasskoeffizienten vorgesehen sind, sowie der Schaltungsteile 7-13, die zur Ermittlung der hochfrequenten Signalanteile, d.h. der Hochpasskoeffizienten, vorgesehen sind. Soll das zuvor beschriebene erfindungsgemäße Verfahren ohne Zeilendifferenzbildung durchgeführt werden, können die Schaltungsteile 1 und 2 entfallen, wobei die Luminanzwerte dann direkt als Eingangswerte für die Schaltungsteile 3-6 bzw. 7-13 dienen.

Die auf diese Weise ermittelten Eingangswerte werden einem über ein nicht gezeigtes Register rückgekoppelten Addierer 3 zugeführt, der somit die zuvor beschriebene Summenbildung zur Ermittlung des Gleichanteils durchführt. Ein Zähler 14 in Kombination mit einem Multiplexer 4 gewährleistet, dass jeweils nach fünf Takten ein neuer Summenwert als neuer Tiefpasskoeffizient in ein vierstufiges Schieberegister 5 geschrieben wird. Durch die vier Stufen des rückgekoppelten Schieberegisters 5 werden die Tiefpasskoeffizienten LP der letzen fünf Blöcke einer Auswertungseinheit 6 zugeführt, die daraufhin die Differenz zwischen dem maximalen Tiefpasskoeffizienten und dem minimalen Tiefpasskoeffizienten des betrachteten Bildbereiches ermittelt und mit dem vorgegebenen Toleranzgrenzwert GAP vergleicht. Ist diese Differenz kleiner als der Toleranzgrenzwert GAP, wird ein weiterer Multiplexer 11 angesteuert, der Bestandteil des Schaltungsteils zur Bestimmung der Hochpasskoeffizienten ist.

Die Eingangswerte, d.h. die Luminanzwerte bzw. die Differenzluminanzwerte, werden zudem einer Bit-Verschiebeinheit 7 zugeführt, die zusammen mit einen nachgeschalteten, über ein nicht gezeigtes Register rückgekoppelten Addierer 8 das zuvor beschriebene (1,-2,2,-2,1)-Filter realisiert. Ein weiterer Multiplexer 9 stellt zusammen mit dem bereits erwähnten Zähler 14 sicher, dass das Ausgangssignal des rückgekoppelten Addierers 8 jeweils nach fünf Taktzyklen übernommen und einem sechsstufigen rückgekoppelten Schieberegister 10 zugeführt wird. Durch die sechs Stufen des Schieberegisters 10 stehen jeweils die Hochpasskoeffizienten HP der letzten sieben Blöcke zur Verfügung. Wenn von der Auswertungseinheit 6 erkannt worden ist, dass der betrachtete Bildbereich aus den letzten fünf Blöcken homogen war, wird der bereits erwähnte Multiplexer 11 derart angesteuert, dass die diesem Bildbereich entsprechenden Hochpasskoeffizienten, welche bis dahin in dem Schieberegister 10 bzw. der entsprechenden Warteschleife gespeichert waren, einem nachgeschalteten, über ein nicht gezeigtes Register rückgekoppelten Addierer 12 zugeführt und zu dem aktuellen Wert der Rauschzahl NOISE_SUM hinzuaddiert werden. Liegt hingegen kein entsprechendes Steuersignal der Auswertungseinheit 6 vor, wird von dem Multiplexer 11 lediglich der Wert "0" ausgegeben und somit die Rauschzahl nicht verändert. Nach Abschluss des Verfahrens wird somit von einer Anzeigeneinheit 13 die Rauschzahl NOISE_SUM ausgegeben, die ein quantitatives Maß für das in dem jeweils betrachteten Bild enthaltene Rauschen darstellt.

Das Schieberegister 5 wurde gemäß Fig. 3 im Gegensatz zum Schieberegister 10 mit lediglich vier Stufen ausgebildet, um eine frühzeitige Ermittlung der homogenen Bildbereiche zu ermöglichen.

In Figur 3 sind der Einfachheit halber keine Schaltungsteile dargestellt, welche zur Normierung der Rauschzahl NOISE_SUM (d.h. die Rauschzahl wird durch die Anzahl der Messpunkte dividiert) oder zur Einstellung der zuvor beschriebenen Parameter vorgesehen sein können.

**Patentansprüche**

1. Verfahren zum Messen des in einem Bild enthaltenen Rauschens, wobei das Bild durch ein entsprechendes Bildsignal beschrieben ist, **dadurch gekennzeichnet, dass** die folgenden Schritte durchgeführt werden:

   a) es wird wenigstens ein homogener Bildbereich (BR) des Bildes ermittelt,

   b) es wird für den mindestens einen ermittelten homogenen Bildbereich (BR) der in dem entsprechenden Bildsignal enthaltene hochfrequente Signalanteil (HP) bestimmt, und

   c) es wird aus dem im Schritt b) bestimmten hochfrequenten Signalanteil (HP) eine Aussage über das in dem Bild enthaltene Rauschen abgeleitet.

2. Verfahren nach Anspruch 1, wobei das Bildsignal digitale Bilddaten des Bildes enthält,
   **dadurch gekennzeichnet, dass** in den Schritten a) und b) die digitalen Bilddaten zeilenweise verarbeitet werden.

3. Verfahren nach Anspruch 1 oder 2,
   **dadurch gekennzeichnet, dass** jedem Bildpunkt des Bildes ein entsprechender Luminanzwert (lum) zugeordnet ist, und
   dass durch Auswertung der Luminanzwerte einzelner Bildpunkte des Bildes im Schritt a) ein homogener Bildbereich (BR) des Bildes ermittelt und im Schritt b) für den ermittelten homogenen Bildbereich (BR) der hochfrequente Signalanteil (HP) bestimmt wird.

4. Verfahren nach Anspruch 3,
   **dadurch gekennzeichnet, dass** im Schritt a) ein Bildbereich (BR) des Bildes als homogen erkannt wird, wenn die Bildpunkte dieses Bildbereichs (BR) eine geringe, innerhalb einer bestimmten Toleranzgrenze (GAP) liegende Streuung der Luminanzwerte (lum) aufweisen.

5. Verfahren nach Anspruch 3,
   **dadurch gekennzeichnet, dass** die Differenz der Luminanzwerte (lum) von entsprechenden Bildpunkten zweier aufeinanderfolgender Bildzeilen gebildet wird, und dass im Schritt a) ein Bildbereich (BR) des Bildes als homogen erkannt wird, wenn die Luminanzdifferenzwerte dieses Bildbereichs (BR) eine geringe, innerhalb einer bestimmten Toleranzgrenze (GAP) liegende Streuung aufweisen.

6. Verfahren nach Anspruch 4 oder 5,
   **dadurch gekennzeichnet, dass**
   das Bild in mehrere Blöcke (BL) mit jeweils mehreren horizontal nebeneinanderliegenden Bildpunkten unterteilt wird,

   dass im Schritt a) für jeden Block (BL) aus den einzelnen Luminanzwerten (lum) bzw. Differenzluminanzwerten der Bildpunkte des entsprechenden Blocks (BL) ein Luminanz-Gleichanteil (LP) bzw. ein Differenzluminanz-Gleichanteil berechnet wird, und
   dass im Schritt a) ein Bildbereich (BR) bestehend aus einer bestimmten Anzahl von horizontal nebeneinanderliegenden Blöcken (BL) als homogen erkannt wird, wenn die Differenz (DIFF) zwischen dem maximalen Luminanz-Gleichanteil (MAX(LP)) und dem minimalen Luminanz-Gleichanteil (MIN(LP)) bzw. die Differenz zwischen dem maximalen Differenzluminanz-Gleichanteil und dem minimalen Differenzluminanz-Gleichanteil der Blöcke (BL) dieses Bildbereichs (BR) innerhalb der bestimmten Toleranzgrenze (GAP) liegt.

7. Verfahren nach Anspruch 6,
   **dadurch gekennzeichnet, dass** jeder Block (BL) dieselbe Anzahl von horizontal nebeneinanderliegenden Bildpunkten umfasst.

8. Verfahren nach Anspruch 6 und Anspruch 7,
   **dadurch gekennzeichnet, dass** die Anzahl der in dem Bildbereich (BR) enthaltenen Blöcke (BL) der Anzahl der in jedem Block (BL) enthaltenden Bildpunkte entspricht.

9. Verfahren nach Anspruch 8,
   **dadurch gekennzeichnet, dass** die Anzahl der in dem Bildbereich (BR) enthaltenen Blöcke (BL) und die Anzahl der in jedem Block (BL) enthaltenen Bildpunkte jeweils fünf entspricht.

10. Verfahren nach einem der Ansprüche 6-9,
    **dadurch gekennzeichnet, dass** für jeden Block (BL) der Luminanz-Gleichanteil bzw. der Differenzluminanz-Gleichanteil gemäß folgender Beziehung ermittelt wird:

$$(3) \quad LP(x',y) = \sum_{i=0}^{n} lum(i+nx',y),$$

wobei LP den Luminanz-Gleichanteil bzw. den Differenzluminanz-Gleichanteil des entsprechenden Blocks (BL), (x',y) die Position des entsprechenden Blocks (BL) in dem Bild, lum den Luminanzwert bzw. den Differenzluminanzwert des entsprechenden Bildpunkts und n die Anzahl der in dem entsprechenden Block (BL) enthaltenen horizontal nebeneinanderliegenden Bildpunkte bezeichnet.

11. Verfahren nach einem der Ansprüche 6 - 10,
    **dadurch gekennzeichnet, dass**
    im Schritt b) der hochfrequente Signalanteil (HP) für den im Schritt a) ermittelten homogenen Bildbereich (BR) dadurch bestimmt wird, dass für jeden Block (BL) dieses homogenen Bildbereichs (BR) ein entsprechender Koeffizient aus den Luminanzwerten (lum) bzw. den Differenzluminanzwerten der einzelnen Bildpunkte des entsprechenden Blocks (BL) abgeleitet und die Summe der einzelnen Koeffizienten (HP) der Blöcke (BL) dieses homogenen Bildbereichs (BR) gebildet wird.

12. Verfahren nach Anspruch 11,
    **dadurch gekennzeichnet, dass** jeder Block (BL) fünf horizontal nebeneinanderliegende Bildpunkte umfasst, und dass im Schritt b) für jeden Block (BL) des als homogen erkannten Bildbereichs (BR) der Koeffizient gemäß folgender Beziehung ermittelt wird:

$$HP(x',y) = lum(5x',y) - 2lum(1+5x',y) + 2lum(2+5x',y) - 2lum(3+5x',y) + lum(4+5x',y), \qquad (2)$$

wobei HP den Koeffizienten des entsprechenden Blocks (BL), (x',y) die Position des entsprechenden Blocks (BL) in dem Bild und lum den Luminanzwert bzw. den Differenzluminanzwert des jeweiligen Bildpunkts bezeichnet.

13. Verfahren nach einem der vorhergehenden Ansprüche,
    **dadurch gekennzeichnet, dass** der hochfrequente Signalanteil (HP) an dem Bildsignal für ein unverrauschtes Bild ermittelt wird, um somit einen Nullpunktfehler zu ermitteln, und
    dass der ermittelte Nullpunktfehler in den Schritten b) oder c) entsprechend berücksichtigt wird.

14. Vorrichtung zum Messen des in einem Bild enthaltenen Rauschens,
    wobei das Bild durch ein entsprechendes Bildsignal beschrieben ist, **dadurch gekennzeichnet, dass** Bildbereich-Ermittlungsmittel (3-6) zum Ermitteln mindestens eines homogenen Bildbereichs (BR) des Bildes vorgesehen sind, und
    dass Bestimmungsmittel (7-13) zum Bestimmen des für den von den Bildbereich-Ermittlungsmitteln (3-6) ermittelten homogenen Bildbereichs (BR) in dem entsprechenden Bildsignal enthaltenen hochfrequenten Signalanteils vorgesehen sind,
    wobei der von den Bestimmungsmitteln (7-13) bestimmte hochfrequente Signalanteil des homogenen Bildbereichs (BR) als Maß für das in dem Bild enthaltene Rauschen auszuwerten ist.

**15.** Vorrichtung nach Anspruch 14,
wobei jedem Bildpunkt des Bildes ein entsprechender Luminanzwert (lum) zugeordnet ist,
**dadurch gekennzeichnet, dass**
den Bildbereich-Ermittlungsmitteln (3-6) und den Bestimmungsmitteln (7-13) als Eingangsdaten die Luminanzwerte der Bildpunkte einer Bildzeile des Bildes zugeführt sind.

**16.** Vorrichtung nach Anspruch 14,
wobei jedem Bildpunkt des Bildes ein entsprechender Luminanzwert (lum) zugeordnet ist,
**dadurch gekennzeichnet, dass**
ein Zeilenspeicher (1) zum Speichern der Luminanzwerte der Bildpunkte einer Bildzeile des Bildes vorgesehen ist, und
dass ein Subtrahierer (2) zum Bilden der Differenz zwischen den Luminanzwerten der Bildpunkte einer Bildzeile und den in dem Zeilenspeicher (1) gespeicherten Luminanzwerten der Bildpunkte einer benachbarten Bildzeile vorgesehen ist,
wobei die von dem Subtrahierer (2) gelieferten Differenzluminanzwerte den Bildbereich-Ermittlungsmitteln (3-6) und den Bestimmungsmitteln (7-13) als Eingangsdaten zugeführt sind.

**17.** Vorrichtung nach Anspruch 15 oder 16,
**dadurch gekennzeichnet, dass**
die Bildbereich-Ermittlungsmittel (3-6) zur Durchführung des Verfahrens nach einem der Ansprüche 6-10 ausgestaltet sind.

**18.** Vorrichtung nach Anspruch 17,
**dadurch gekennzeichnet, dass**
die Bildbereich-Ermittlungsmittel einen rückgekoppelten Addierer (3), einen Multiplexer (4), ein Schieberegister (5) und eine Auswertungseinrichtung (6) umfassen,

wobei der rückgekoppelte Addierer (3) die Eingangsdaten empfängt,

wobei der Multiplexer (4) als Eingangssignale das Ausgangssignal des rückgekoppelten Addierers (3) und das Ausgangssignal des Schieberegisters (5) empfängt und von einem Zähler (14) derart angesteuert wird, dass das Ausgangssignal des rückgekoppelten Addierers (3) über den Multiplexer (4) nach jeweils einer der Anzahl der Bildpunkte pro Block (BL) entsprechenden Anzahl von Taktzyklen zu dem Schieberegister (5) durchgeschaltet wird, während ansonsten das Ausgangssignal des Schieberegisters (5) über den Multiplexer (4) zu dem Schieberegister (5) durchgeschaltet wird, und

wobei die Auswertungseinrichtung (6) derart ausgestaltet ist, dass sie den maximalen und minimalen Luminanz-Gleichanteil bzw. Differenzluminanz-Gleichanteil der in dem Schieberegister (5) gespeicherten bzw. daran anliegenden Luminanz-Gleichanteile (LP) bzw. Differenzluminanz-Gleichanteile ermittelt, davon die Differenz (DIFF) bildet und ein Steuersignal erzeugt, falls die Differenz (DIFF) innerhalb der bestimmten Toleranzgrenze (GAP) liegt.

**19.** Vorrichtung nach Anspruch 18,
**dadurch gekennzeichnet, dass** das Schieberegister (5) der Bildbereich-Ermittlungs-mittel vierstufig aufgebaut ist.

**20.** Vorrichtung nach einem der Ansprüche 17-19,
**dadurch gekennzeichnet, dass** die Bestimmungsmittel (7-13) zur Durchführung des Verfahrens nach Anspruch 11 oder 12 ausgestaltet sind.

**21.** Vorrichtung nach Anspruch 20 und Anspruch 18 oder 19,
**dadurch gekennzeichnet, dass** die Bestimmungsmittel eine Berechnungseinrichtung (7, 8) zum Berechnen des dem jeweiligen Block (BL) entsprechenden Koeffizienten (HP) aus den anliegenden Eingangsdaten umfassen, und dass die Bestimmungsmittel einen ersten Multiplexer (9), ein Schieberegister (10), einen zweiten Multiplexer (11) und einen rückgekoppelten Addierer (12) umfassen,

wobei der erste Multiplexer (9) als Eingangssignale das Ausgangssignal der Berechnungseinrichtung (7, 8) und das Ausgangssignal des Schieberegisters (10) empfängt und von dem Zähler (14) derart angesteuert ist, dass das Ausgangssignal der Berechnungseinrichtung (7, 8) nach jeweils einer der Anzahl der in jedem Block (BL) enthaltenen Bildpunkte entsprechenden Anzahl von Taktzyklen über den Multiplexer (9) zu dem Schieberegister (10) durchgeschaltet wird, während ansonsten das Ausgangssignal des Schieberegisters (10) über den Multiplexer (9) zu dem Schieberegister (10) durchgeschaltet ist,

wobei der zweite Multiplexer (11) als Eingangssignale ein Signal mit dem festen Wert null und das Ausgangssignal des Schieberegisters (10) empfängt und durch das Steuersignal der Auswertungseinrichtung (6) der Bildbereich-Ermitt-lungsmittel derart angesteuert ist, dass das Ausgangssignal des Schieberegisters (10) über den zweiten Multiplexer (11) zu dem rückgekoppelten Addierer (12) nur dann durchgeschaltet wird, solange das von der Auswertungseinrichtung (6) erzeugte Steuersignal vorliegt, während ansonsten das Eingangssignal mit dem festen Wert null zu dem rückgekoppelten Addierer (12) durchgeschaltet wird, und

wobei das Ausgangssignal des rückgekoppelten Addierers (12) als Maß für das in dem jeweils betrachteten Bild enthaltene Rauschen auszuwerten ist.

22. Vorrichtung nach Anspruch 21,
**dadurch gekennzeichnet, dass** die Berechnungseinrichtung der Bestimmungsmittel eine Bit-Verschiebeeinrichtung (7) und einen rückgekoppelten Addierer (8) umfasst,

wobei die Bit-Verschiebeeinrichtung (7) die Eingangsdaten empfängt und durch Bit-Verschiebeoperationen die Eingangsdaten entsprechend bewertet, und

wobei der rückgekoppelte Addierer (8) als Eingangssignal das Ausgangssignal der Bit-Verschiebeeinrichtung (7) empfängt und mit seinem Ausgang mit dem ersten Multiplexer (9) der Bestimmungsmittel verbunden ist.

23. Vorrichtung nach Anspruch 21 oder 22,
**dadurch gekennzeichnet, dass** das Schieberegister (10) der Bestimmungsmittel sechsstufig aufgebaut ist.

# FIG 1

| Anzahl Meßpunkte < Parameter |  |
|---|---|
| Berechne Tiefpasskoeffizienten LP | 100 |
| MAX(LP)-MIN(LP)=DIFF | 101 |
| DIFF < GAP? | 102 |

homogen inhomogen

$$NOISE\_SUM = NOISE\_SUM + \sum_{i=0}^{i<5} |HP(i)|$$

103

Bereich verwerfen

Messung anzeigen  104

# FIG 2

MAX(LP)  LP  BL  BR

Helligkeit

MIN(LP)  lum

DIFF  GAP

x (Position in Zeile)

## FIG 3